# EUROPEAN PATENT APPLICATION

(11) **EP 4 534 865 A1**
(43) Date of publication of application: **09.04.2025**
(21) Application number: 23823632.7
(22) Date of filing: 23.05.2023
(51) Int. Cl.: F16C 19/26, F16C 33/62

(54) **FOLLOWER BEARING, FOLLOWER BEARING MODULE, AND METHOD OF MANUFACTURING INNER MEMBER OF FOLLOWER BEARING**

(30) Priority: 17.06.2022 JP 2022097876
(71) Applicant: Nippon Thompson Co., Ltd., Tokyo 108-8586 (JP)
(72) Inventor: TSURUTA, Kenichiro, Mino-shi, Gifu 501-3763 (JP); MATSUBARA, Yukio, Mino-shi, Gifu 501-3763 (JP); NAKAMURA, Tomoaki, Mino-shi, Gifu 501-3763 (JP); TAKAYA, Yusuke, Mino-shi, Gifu 501-3763 (JP); SHIBUYA, Yuichi, Mino-shi, Gifu 501-3763 (JP); SUZUKI, Jinya, Mino-shi, Gifu 501-3763 (JP)
(74) Representative: Isarpatent
(86) International application number: PCT/JP2023/019182
(87) International publication number: WO 2023/243332

(57) **Abstract**

Abstract: A follower bearing includes an inner member including an inner wall surface defining a through hole, an outer ring, and a plurality of rolling elements. A portion of the through hole with a smallest diameter has a diameter that is 40% or more of an outside diameter of a portion of the inner member with a smallest outside diameter. The inner member is composed of a steel containing not less than 0.12 mass% and not more than 0.39 mass% carbon, not less than 0.05 mass% and not more than 0.40 mass% silicon, not less than 0.55 mass% and not more than 0.95 mass% manganese, and not less than 0.60 mass% and not more than 1.25 mass% chromium, with the balance consisting of iron and unavoidable impurities, and includes a carburized layer so as to constitute at least a part of a surface thereof. In the carburized layer, the grain size number of prior austenite grains as specified in JIS G 0551 is not less than 8.6.

## Description

### Technical Field

The present disclosure relates to a follower bearing, a follower bearing module, and a method of producing an inner member of a follower bearing. The present application claims priority based on Japanese Patent Application No. 2022-097876 filed on June 17, 2022, the entire contents of which are incorporated herein by reference.

### Background Art

A follower bearing having a columnar stud and a follower bearing module for mounting such a follower bearing to a mounted member are known (see, for example, Patent Literature 1 and Patent Literature 2).

### Citation List

### Patent Literature

Patent Literature 1: Japanese Patent Application Laid-Open No. H10-2400
Patent Literature 2: Japanese Patent Application Laid-Open No. 2000-346173

### Summary of Invention

### Technical Problem

There is a desire for ease of mounting that allows a follower bearing to be easily mounted to a mounted member. There is also a desire to suppress the reduction in fatigue strength of a stud (inner member) of the follower bearing.

In view of the foregoing, one of the objects of the present disclosure is to provide a follower bearing, a follower bearing module, and a method of producing an inner member of a follower bearing which are excellent in ease of mounting while suppressing reduction of fatigue strength of the inner member.

### Solution to Problem

A first follower bearing according to the present disclosure includes: an inner member including an outer circumferential surface that includes an annular first raceway surface having a central axis and an inner wall surface that defines a through hole including the central axis; an outer ring including an annular second raceway surface facing the first raceway surface on an inner circumferential surface thereof; and a plurality of rolling elements arranged on an annular raceway along the first and second raceway surfaces so as to contact the first and second raceway surfaces. A portion of the through hole with a smallest diameter has a diameter that is 40% or more of an outside diameter of a portion of the inner member with a smallest outside diameter. The inner member is composed of a steel containing not less than 0.12 mass% and not more than 0.39 mass% carbon, not less than 0.05 mass% and not more than 0.40 mass% silicon, not less than 0.55 mass% and not more than 0.95 mass% manganese, and not less than 0.60 mass% and not more than 1.25 mass% chromium, with the balance consisting of iron and unavoidable impurities. The inner member includes a carburized layer containing not less than 0.60 mass% and not more than 1.20 mass% carbon so as to constitute at least a part of a surface thereof. In the carburized layer, the grain size number of prior austenite grains as specified in JIS (Japanese Industrial Standards) G 0551 is not less than 8.6.

### Advantageous Effects of Invention

According to the follower bearing of the present disclosure, the follower bearing can be easily mounted to a mounted member, while suppressing the reduction of the fatigue strength of the inner member.

### Brief Description of Drawings

FIG. 1 is a schematic perspective view of a follower bearing module in Embodiment 1 of the present disclosure.
FIG. 2 is a schematic view of a cross section indicated by II-II in FIG. 1.
FIG. 3 is a schematic view of a cross section indicated by III-III in FIG. 1.
FIG. 4 is a schematic exploded perspective view of the follower bearing module shown in FIG. 1.
FIG. 5 is a schematic perspective view of a fixing element in Embodiment 1 of the present disclosure, as viewed in a first direction.
FIG. 6 is a schematic perspective view of the fixing element of FIG. 5, as viewed in a second direction which is opposite to the first direction.
FIG. 7 is a schematic view of the fixing element of FIG. 5, as viewed in a direction facing a tenth end surface of a plate-shaped portion.
FIG. 8 is a schematic cross-sectional view of the fixing element of FIG. 5, as cut in a plane including a central axis of a cylindrical portion.
FIG. 9 is a flowchart illustrating steps of a method of producing a shaft member.
FIG. 10 is a diagram showing an example of a portion of a heat pattern during the process of producing the shaft member.
FIG. 11 is a schematic perspective view of a follower bearing module in Embodiment 2 of the present disclosure.
FIG. 12 is a schematic view of a cross section indicated by IV-IV in FIG. 11.
FIG. 13 is a schematic view of a cross section indicated by V-V in FIG. 11.
FIG. 14 is a schematic exploded perspective view of the follower bearing module shown in FIG. 11.
FIG. 15 is a schematic perspective view of a fixing element in Embodiment 2 of the present disclosure, as viewed in a first direction.
FIG. 16 is a schematic perspective view of the fixing element of FIG. 15, as viewed in a second direction which is opposite to the first direction.
FIG. 17 is a schematic view of the fixing element of FIG. 15, as viewed in a direction facing a tenth end surface of a plate-shaped portion.
FIG. 18 is a diagram showing an example of the prior austenite grains in a carburized layer of a shaft member produced according to a method of producing a shaft member of the present disclosure.
FIG. 19 is a diagram showing a comparative example of the prior austenite grains in a carburized layer of a shaft member.
FIG. 20 is a schematic view of a test specimen used in a rotating bending fatigue test in Example 2.
FIG. 21 is an enlarged view of a notch in the test specimen of FIG. 20.
FIG. 22 is a diagram showing S-N curves in Example 2.
FIG. 23 is a diagram showing an example of the prior austenite grains in a carburized layer of a test specimen heated to a temperature of 860°C in a carburizing atmosphere.
FIG. 24 is a diagram showing an example of the prior austenite grains in a carburized layer of a test specimen heated to a temperature of 900°C in a carburizing atmosphere.
FIG. 25 is a diagram showing an example of the prior austenite grains in a carburized layer of a test specimen heated to a temperature of 930°C in a carburizing atmosphere.
FIG. 26 is a diagram illustrating a relationship between the fatigue limit and the grain size number of the prior austenite grains.

### Description of Embodiments

### [Outline of Embodiments]

Embodiments of the present disclosure will first be listed and described. A first follower bearing according to the present disclosure includes: an inner member including an outer circumferential surface that includes an annular first raceway surface having a central axis and an inner wall surface that defines a through hole including the central axis; an outer ring including an annular second raceway surface facing the first raceway surface on an inner circumferential surface thereof; and a plurality of rolling elements arranged on an annular raceway along the first and second raceway surfaces so as to contact the first and second raceway surfaces. A portion of the through hole with a smallest diameter has a diameter that is 40% or more of an outside diameter of a portion of the inner member with a smallest outside diameter. The inner member is composed of a steel containing not less than 0.12 mass% and not more than 0.39 mass% carbon, not less than 0.05 mass% and not more than 0.40 mass% silicon, not less than 0.55 mass% and not more than 0.95 mass% manganese, and not less than 0.60 mass% and not more than 1.25 mass% chromium, with the balance consisting of iron and unavoidable impurities. The inner member includes a carburized layer containing not less than 0.60 mass% and not more than 1.20 mass% carbon so as to constitute at least a part of a surface thereof. In the carburized layer, the grain size number of prior austenite grains as specified in JIS G 0551 is not less than 8.6.

That the inner member includes the inner wall surface defining the through hole including the central axis, i.e., that the inner member has the through hole formed therein, makes it possible to utilize the through hole to mount the follower bearing to a mounted member. Thus, the follower bearing can be easily mounted to the mounted member. Although there may be a concern about the reduction of the fatigue strength of the inner member due to the through hole formed in the inner member, the reduction of the fatigue strength of the inner member can be suppressed by the fine prior austenite grains with the grain size number of 8.6 or more in the carburized layer. Thus, according to the first follower bearing of the present disclosure, the follower bearing can be easily mounted to a mounted member while suppressing the reduction in fatigue strength of the inner member.

A second follower bearing according to the present disclosure includes: an inner member including an outer circumferential surface that includes an annular first raceway surface having a central axis and an inner wall surface that defines a through hole including the central axis; an outer ring including an annular second raceway surface facing the first raceway surface on an inner circumferential surface thereof; and a plurality of rolling elements arranged on an annular raceway along the first and second raceway surfaces so as to contact the first and second raceway surfaces. A portion of the through hole with a smallest diameter has a diameter that is 40% or more of an outside diameter of a portion of the inner member with a smallest outside diameter. The inner member is composed of a steel containing not less than 0.12 mass% and not more than 0.39 mass% carbon, not less than 0.05 mass% and not more than 0.40 mass% silicon, not less than 0.55 mass% and not more than 0.95 mass% manganese, not less than 0.60 mass% and not more than 1.25 mass% chromium, and not less than 0.15 mass% and not more than 0.35 mass% molybdenum, with the balance consisting of iron and unavoidable impurities. The inner member includes a carburized layer containing not less than 0.60 mass% and not more than 1.20 mass% carbon so as to constitute at least a part of a surface thereof. In the carburized layer, the grain size number of prior austenite grains as specified in JIS G 0551 is not less than 8.6.

In the second follower bearing according to the present disclosure, as in the above-described first follower bearing according to the present disclosure, that the inner member includes the inner wall surface defining the through hole including the central axis, i.e., that the inner member has the through hole formed therein, makes it possible to utilize the through hole to mount the follower bearing to a mounted member. Thus, the follower bearing can be easily mounted to the mounted member. Although there may be a concern about the reduction of the fatigue strength of the inner member due to the through hole formed in the inner member, the reduction of the fatigue strength of the inner member can be suppressed by the fine prior austenite grains with the grain size number of 8.6 or more in the carburized layer. Thus, according to the second follower bearing of the present disclosure, the follower bearing can be easily mounted to a mounted member while suppressing the reduction in fatigue strength of the inner member.

In the above follower bearing, the surface of the inner member constituted by the carburized layer may have a hardness of not less than 700 HV. This facilitates imparting high fatigue strength to the inner member.

In the above follower bearing, the inner member may include a large diameter portion including the first raceway surface on an outer circumferential surface thereof, and a small diameter portion having an outside diameter smaller than an outside diameter of the large diameter portion and connected to the large diameter portion at a first end portion which is an end portion in a direction along the central axis. The carburized layer may be arranged so as to include an outer circumferential surface corresponding to the first end portion in the small diameter portion. This can suppress the reduction of the fatigue strength in the portion of the inner member where stress would likely be concentrated.

A follower bearing module according to the present disclosure includes: the follower bearing described above; a fixing element; and a fastening element. The fixing element includes a cylindrical portion having a threaded groove on an inner circumferential surface thereof, and a plate-shaped portion arranged at one end in an axial direction of the cylindrical portion and extending radially outward of the cylindrical portion. The fastening element includes a body portion having a thread on an outer circumferential surface thereof that can be coupled with the threaded groove of the cylindrical portion, and a head portion connected to one end portion in a longitudinal direction of the body portion and having a larger outside diameter than the body portion. The follower bearing and the fixing element are capable of being fastened together by coupling between the threaded groove of the cylindrical portion inserted into the through hole and the thread of the body portion inserted into the through hole in a state where the plate-shaped portion of the fixing element is located on one side in a direction along the central axis as viewed from the through hole and where the head portion of the fastening element is located on another side in the direction along the central axis as viewed from the through hole. This further facilitates the mounting of the follower bearing to a mounted member by utilizing the through hole.

In the above follower bearing module, the fixing element may further include a circular arc-shaped portion connecting the cylindrical portion to the plate-shaped portion. The circular arc-shaped portion may have a radius of curvature of not less than 0.5 mm and not more than 1.5 mm. The radius of curvature of 0.5 mm or more of the circular arc-shaped portion can suppress the concentration of stress between the cylindrical portion and the plate-shaped portion. The radius of curvature of 1.5 mm or less of the circular arc-shaped portion can suppress the interference between the inner member and the fixing element when the cylindrical portion of the fixing element is inserted into the through hole of the inner member of the follower bearing.

In a method of producing an inner member of a follower bearing according to the present disclosure, the inner member includes an outer circumferential surface that includes an annular first raceway surface having a central axis and an inner wall surface that defines a through hole including the central axis. A portion of the through hole with a smallest diameter has a diameter that is 40% or more of an outside diameter of a portion of the inner member with a smallest outside diameter. The method of producing the inner member includes the steps of: preparing a formed body having a shape of the inner member and composed of a steel containing not less than 0.12 mass% and not more than 0.39 mass% carbon, not less than 0.05 mass% and not more than 0.40 mass% silicon, not less than 0.55 mass% and not more than 0.95 mass% manganese, and not less than 0.60 mass% and not more than 1.25 mass% chromium, with the balance consisting of iron and unavoidable impurities; forming a carburized layer so as to constitute at least a part of a surface of the formed body by heating the formed body in a carburizing atmosphere to a temperature not lower than the A1 point of the steel and not higher than 900°C; and quench hardening the formed body by cooling the formed body with the carburized layer formed from a temperature range not lower than the A1 point of the steel to a temperature range not higher than the MS point. Thus, it is readily possible to produce an inner member that includes a carburized layer in which the grain size number of the prior austenite grains as specified in JIS G 0551 is 8.6 or more and which constitutes at least a part of the surface.

### [Specific Embodiments]

Specific embodiments of the follower bearing of the present disclosure will be described below with reference to the drawings. In the drawings referenced below, the same or corresponding portions are denoted by the same reference numerals and the description thereof will not be repeated.

### (Embodiment 1)

### [Follower Bearing Module]

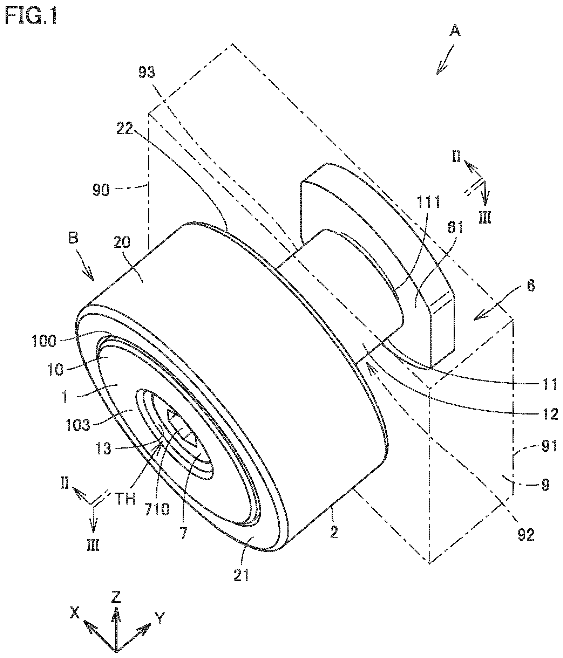

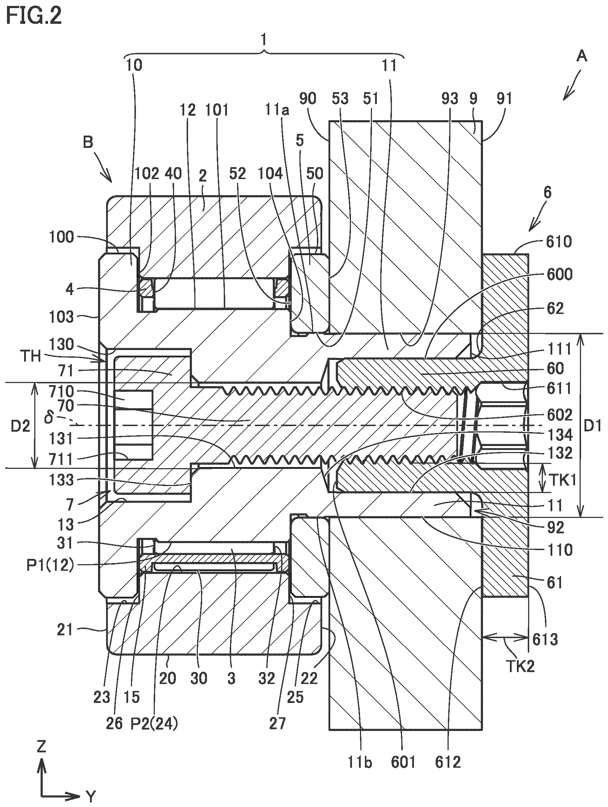

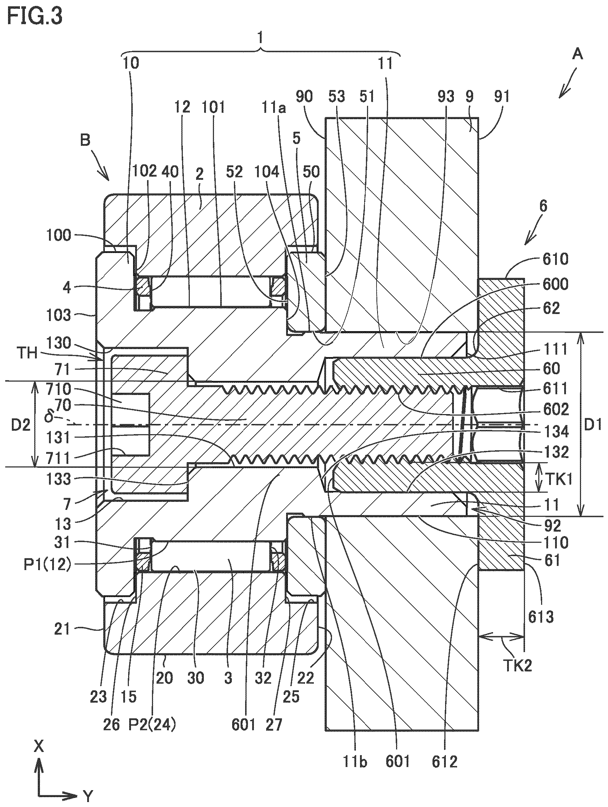

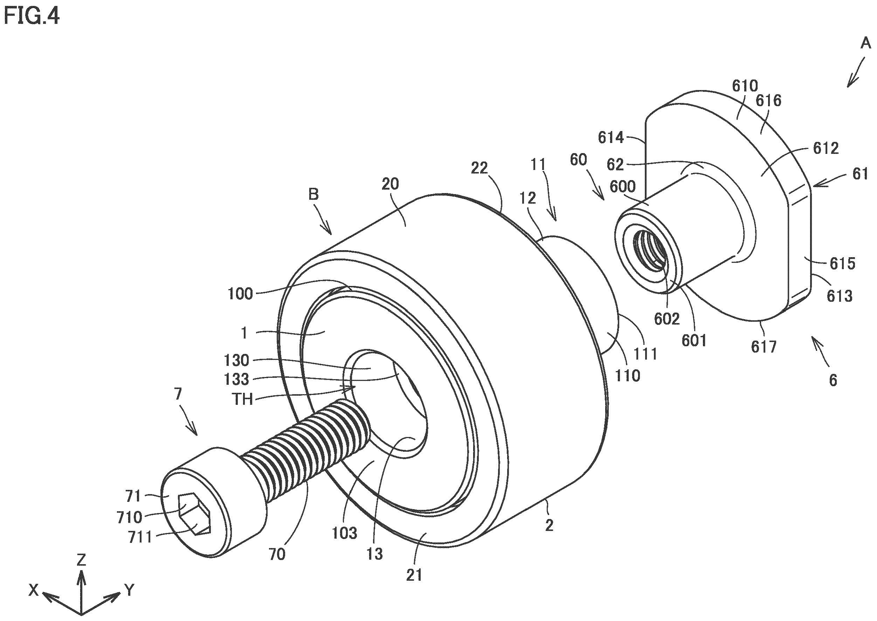

Embodiment 1 of the present disclosure will be described first. FIG. 1 is a schematic perspective view of a follower bearing module A in Embodiment 1 of the present disclosure. FIG. 2 is a schematic view of a cross section indicated by II-II in FIG. 1. FIG. 3 is a schematic view of a cross section indicated by III-III in FIG. 1. FIG. 4 is a schematic exploded perspective view of the follower bearing module A shown in FIG. 1.

In FIG. 1 and the following figures, the Y direction indicates a direction parallel to an axis of rotation of a follower bearing B. The X direction and the Z direction are perpendicular to the Y direction. The X direction and the Z direction are orthogonal to each other. In FIG. 1, a mounted member 9 is indicated by long dashed short dashed lines. In FIGS. 2 and 3, a central axis δ is indicated by a long dashed short dashed line. In FIG. 4, the illustration of the mounted member 9 is omitted.

Referring to FIGS. 1, 2, 3, and 4 together, the follower bearing module A in Embodiment 1 includes a follower bearing B, a fixing element 6, and a bolt 7 as a fastening element. The follower bearing module A is mounted to a mounted member 9 having a predetermined thickness. The mounted member 9 includes a first surface 90, a second surface 91 arranged parallel to the first surface 90 and facing in a direction opposite to the direction in which the first surface 90 faces, and an inner wall surface 93 defining a mounting hole 92 penetrating from the first surface 90 to the second surface 91. The follower bearing B is mounted to the mounted member 9 utilizing the mounting hole 92. The mounting hole 92 has a round hole shape. The inner wall surface 93 has a cylindrical shape. Such a mounting hole 92 can be formed more easily than, for example, a mounting hole in which the inner wall surface 93 includes a stepped surface.

### <Follower Bearing>

Referring to FIGS. 2 and 3 together, the follower bearing B includes a shaft member 1 (inner member), an outer ring 2, a plurality of rollers 3 (rolling elements), a retainer 4, and a side plate 5. The shaft member 1 includes a large diameter portion 10, and a small diameter portion 11 connected to the large diameter portion 10 and having an outside diameter smaller than that of the large diameter portion 10. The outside diameter or diameter may be a diameter or an equivalent circle diameter (diameter of a circle having an area corresponding to the target configuration in a cross section when the shaft member 1 is cut in a plane perpendicular to the axial direction).

The large diameter portion 10 includes a first outer circumferential surface 100, a second outer circumferential surface 101 having a diameter smaller than that of the first outer circumferential surface 100, a first stepped surface 102 connecting the first outer circumferential surface 100 to the second outer circumferential surface 101, a first end surface 103 connected to an end edge of the first outer circumferential surface 100, and a second end surface 104 connected to an end edge of the second outer circumferential surface 101. The first outer circumferential surface 100 and the second outer circumferential surface 101 have a cylindrical shape. The first outer circumferential surface 100 and the second outer circumferential surface 101 are concentrically arranged. The second outer circumferential surface 101 includes an annular first raceway surface P1 having a central axis δ. That is, the large diameter portion 10 includes the first raceway surface P1 on its outer circumferential surface. It should be noted that the first outer circumferential surface 100 may have a polygonal or elliptical cylindrical shape. The first end surface 103 and the second end surface 104 are parallel.

The small diameter portion 11 is connected to the second end surface 104 of the large diameter portion 10 at its first end portion 11a, which is an end portion in a direction along the central axis δ. The small diameter portion 11 has an outside diameter D1 that is sufficient to be fitted into the mounting hole 92 in the mounted member 9. The small diameter portion 11 is arranged concentrically with the large diameter portion 10. The small diameter portion 11 includes an outer circumferential surface 110 having one end edge connected to the second end surface 104 of the large diameter portion 10, and a third end surface 111 connected to an end edge of the outer circumferential surface 110 opposite to the end edge connected to the second end surface 104 of the large diameter portion 10. The outer circumferential surface 110 has a cylindrical shape. It should be noted that the outer circumferential surface 110 may have a polygonal or elliptical cylindrical shape. The third end surface 111 is parallel to the first end surface 103. The first end portion 11a has, formed therein, a portion 11b having a larger outside diameter than the region fitted into the mounting hole 92.

The shaft member 1 includes an outer circumferential surface 12 including the first raceway surface P1, and an inner wall surface 13 defining a through hole TH including the central axis δ. The outer circumferential surface 12 includes the first outer circumferential surface 100 and the second outer circumferential surface 101 of the large diameter portion 10 and the outer circumferential surface 110 of the small diameter portion 11.

The through hole TH penetrates from the first end surface 103 of the large diameter portion 10 to the third end surface 111 of the small diameter portion 11. The inner wall surface 13 defining the through hole TH includes a first inner wall surface 130 connected to the first end surface 103 of the large diameter portion 10, a second inner wall surface 131, a third inner wall surface 132 connected to the third end surface 111 of the small diameter portion 11, a second stepped surface 133 connecting the first inner wall surface 130 to the second inner wall surface 131, and a third stepped surface 134 connecting the second inner wall surface 131 to the third inner wall surface 132. The first inner wall surface 130, the second inner wall surface 131, and the third inner wall surface 132 have a cylindrical shape. The third inner wall surface 132 has a diameter smaller than that of the first inner wall surface 130. The second inner wall surface 131 has a diameter smaller than that of the third inner wall surface 132. The first inner wall surface 130, the second inner wall surface 131, and the third inner wall surface 132 have a cylindrical shape. It should be noted that the first inner wall surface 130, the second inner wall surface 131, and the third inner wall surface 132 may have a polygonal or elliptical cylindrical shape.

A portion of the through hole TH with a smallest diameter has a diameter that is 40% or more of an outside diameter of a portion of the shaft member 1 with a smallest outside diameter. The portion of the through hole TH having a smallest diameter may be a portion of the through hole TH in which the nominal diameter is smallest, a portion in which the diameter of the through hole TH is locally smallest, or a portion in which the moving average value of the diameter of the through hole TH is smallest when looking at the transition of the diameter of the through hole TH with respect to the position in the direction along the central axis δ. The portion of the shaft member 1 having a smallest outside diameter may be a portion of the shaft member 1 in which the nominal diameter is smallest, a portion in which the outside diameter of the shaft member 1 is locally smallest, or a portion in which the moving average value of the outside diameter of the shaft member 1 is smallest when looking at the transition of the outside diameter of the shaft member 1 with respect to the position in the direction along the central axis δ.

In the present embodiment, the portion corresponding to the second inner wall surface 131, which is the portion of the through hole TH with a smallest diameter (portion in which the nominal diameter is smallest), has a diameter D2 which is 40% or more of the outside diameter D1 of the small diameter portion 11, which is the portion of the shaft member 1 with a smallest outside diameter (portion in which the nominal diameter is smallest). For example, when the outside diameter D1 of the small diameter portion 11 is 8 mm, the diameter D2 of the portion of the through hole TH with a smallest diameter is 3.3 mm. When the outside diameter D1 of the small diameter portion 11 is 10 mm, the diameter D2 of the portion of the through hole TH with a smallest diameter is 4.4 mm. When the outside diameter D1 of the small diameter portion 11 is 12 mm, the diameter D2 of the portion of the through hole TH with a smallest diameter is 5.4 mm. The diameter D2 is, for example, not less than 40% and not more than 65% of the outside diameter D1 of the small diameter portion 11.

The shaft member 1 is composed of a steel that contains not less than 0.12 mass% and not more than 0.39 mass% carbon, not less than 0.05 mass% and not more than 0.40 mass% silicon, not less than 0.55 mass% and not more than 0.95 mass% manganese, and not less than 0.60 mass% and not more than 1.25 mass% chromium, with the balance consisting of iron and unavoidable impurities. The term "unavoidable impurities" refers to impurities that are generally present in the raw materials of a metal product or are unavoidably mixed in during the producing process, and that are difficult to remove completely, although essentially unnecessary, and are permitted as being inevitable.

The shaft member 1 may be composed of a steel that contains not less than 0.12 mass% and not more than 0.39 mass% carbon, not less than 0.05 mass% and not more than 0.40 mass% silicon, not less than 0.55 mass% and not more than 0.95 mass% manganese, not less than 0.60 mass% and not more than 1.25 mass% chromium, and not less than 0.15 mass% and not more than 0.35 mass% molybdenum, with the balance consisting of iron and unavoidable impurities. The shaft member 1 is composed of, for example, SCr415, SCr420, SCr430, SCr435, SCM415, SCM418, SCM420, SCM421, SCM425, SCM430, SCM432, or SCM435, as specified in JIS G 4053.

The shaft member 1 includes a carburized layer containing not less than 0.60 mass% and not more than 1.20 mass% carbon so as to constitute at least a part of the surface. In the carburized layer, the grain size number of the prior austenite grains as specified in JIS G 0551 (hereinafter, simply referred to as "grain size number of the prior austenite grains") is not less than 8.6. The surface of the shaft member 1 constituted by the carburized layer has a hardness of, for example, not less than 700 HV. In the present embodiment, the carburized layer is arranged so as to include the outer circumferential surface corresponding to the first end portion 11a of the small diameter portion 11. It should be noted that the shaft member 1 is not limited to the above and may have a uniform outside diameter.

Referring to FIGS. 1, 2, 3, and 4 together, the outer ring 2 includes an outer circumferential surface 20, a fourth end surface 21 connected to one end edge of the outer circumferential surface 20, and a fifth end surface 22 connected to another end edge of the outer circumferential surface 20. The fourth end surface 21 and the fifth end surface 22 are parallel. The outer ring 2 includes a first inner circumferential surface 23 connected to the fourth end surface 21, a second inner circumferential surface 24 having a diameter smaller than that of the first inner circumferential surface 23, a third inner circumferential surface 25 connected to the fifth end surface 22 and having a diameter larger than that of the second inner circumferential surface 24, a fourth stepped surface 26 connecting the first inner circumferential surface 23 to the second inner circumferential surface 24, and a fifth stepped surface 27 connecting the second inner circumferential surface 24 to the third inner circumferential surface 25.

The first inner circumferential surface 23 and the third inner circumferential surface 25 have the same diameter (which may include an error within the range of normal size tolerances). The diameter of the first inner circumferential surface 23 may be different from the diameter of the third inner circumferential surface 25. The outer circumferential surface 20, the first inner circumferential surface 23, the second inner circumferential surface 24, and the third inner circumferential surface 25 are concentrically arranged. The first inner circumferential surface 23 faces the first outer circumferential surface 100 of the large diameter portion 10 of the shaft member 1. The second inner circumferential surface 24 faces the second outer circumferential surface 101 of the large diameter portion 10. The third inner circumferential surface 25 faces the side plate 5. The second inner circumferential surface 24 includes an annular second raceway surface P2 facing the first raceway surface P1. That is, the outer ring 2 includes the second raceway surface P2 on the second inner circumferential surface 24. The second raceway surface P2 has a central axis in common with the central axis δ. In other words, the central axis δ is an axis of rotation of the follower bearing B. The outer ring 2 is composed of a steel. A region of the outer ring 2 including the second raceway surface P2 is quench hardened. In the outer ring 2, only a portion including the second raceway surface P2 may be quench hardened, or the entire portion may be quench hardened.

The rollers 3 are arranged on an annular raceway along the first raceway surface P1 and the second raceway surface P2 so as to contact the first raceway surface P1 and the second raceway surface P2. The rollers 3 have a solid cylindrical shape. Each roller 3 includes an outer circumferential surface 30 and a pair of end surfaces 31 and 32 connected to both end edges of the outer circumferential surface 30. The end surfaces 31 and 32 of the roller 3 may be spherical. The rollers 3 are composed of, for example, a bearing steel or other steel. The rollers 3 are quench hardened. It should be noted that balls may be used instead of the rollers 3 as the rolling elements.

The retainer 4 retains the rollers 3 on the annular raceway along the first raceway surface P1 and the second raceway surface P2 such that the rollers 3 contact the first raceway surface P1 and the second raceway surface P2 and that adjacent rollers 3 do not contact each other. The retainer 4 has an annular shape. The retainer 4 is arranged concentrically with the shaft member 1 and the outer ring 2 in a space sandwiched between the shaft member 1 and the outer ring 2. The retainer 4 includes a plurality of pockets 40 arranged at equal intervals in a circumferential direction. One roller 3 is arranged in each of the plurality of pockets 40. The retainer 4 is composed of a steel, for example. The retainer 4 may be composed of a resin.

The side plate 5 has an annular shape. The side plate 5 includes an outer circumferential surface 50, an inner circumferential surface 51, a sixth end surface 52 connected to one end edges of the outer circumferential surface 50 and the inner circumferential surface 51, and a seventh end surface 53 connected to another end edges of the outer circumferential surface 50 and the inner circumferential surface 51. The outer circumferential surface 50 and the inner circumferential surface 51 are concentrically arranged. The sixth end surface 52 and the seventh end surface 53 are parallel. The side plate 5 is press-fitted to the small diameter portion 11 of the shaft member 1. Press-fitting refers to the state in which the side plate 5 is fitted to the small diameter portion 11 of the shaft member 1 to the extent that it is secured. The inner circumferential surface 51 of the side plate 5 has a diameter slightly larger than the outside diameter D1 of the small diameter portion 11. The inner circumferential surface 51 of the side plate 5 has a diameter that is sufficient to be fitted to the portion 11b having a larger outside diameter of the small diameter portion 11. The side plate 5 is press-fitted to and secured at the portion 11b having the larger outside diameter. The side plate 5 is arranged to contact the second end surface 104 of the large diameter portion 10 at the sixth end surface 52. The side plate 5 is composed of a steel, for example. The side plate 5 may be quench hardened.

### <Fixing Element>

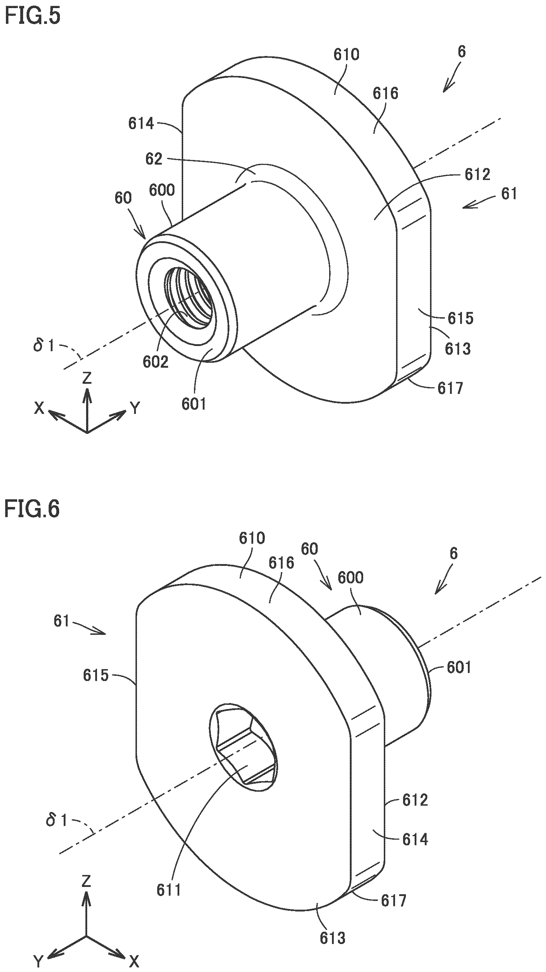

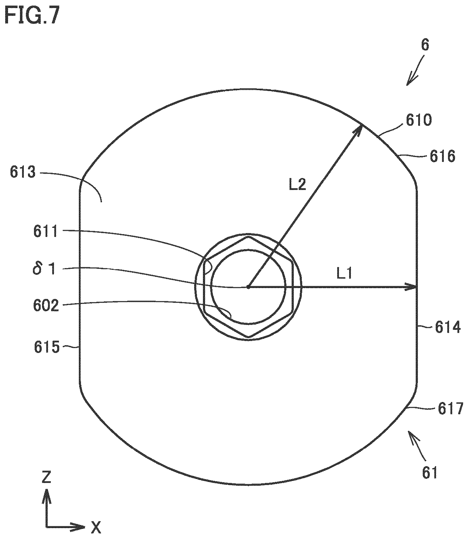

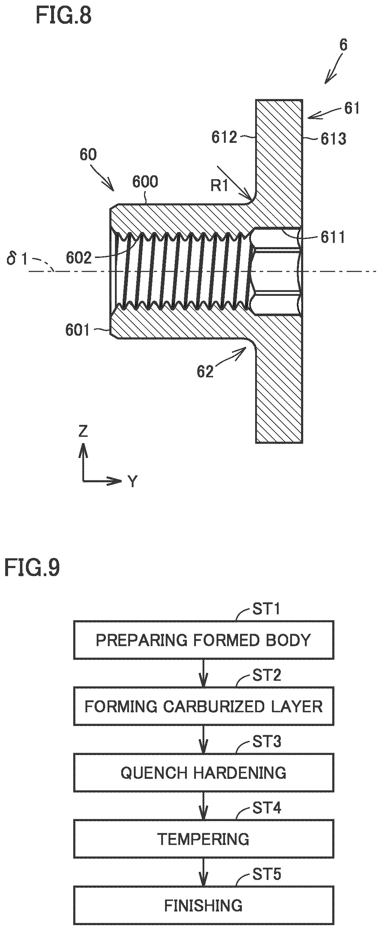

FIG. 5 is a schematic perspective view of the fixing element 6 in Embodiment 1 of the present disclosure, as viewed in a first direction. FIG. 6 is a schematic perspective view of the fixing element 6 of FIG. 5, as viewed in a second direction which is opposite to the first direction. FIG. 7 is a schematic view of the fixing element 6 of FIG. 5, as viewed in a direction facing a tenth end surface 613 of a plate-shaped portion 61. FIG. 8 is a schematic cross-sectional view of the fixing element 6 of FIG. 5, as cut in a plane including a central axis δ1 of a cylindrical portion 60.

Referring to FIGS. 1, 2, 3, 4, 5, 6, 7, and 8 together, the fixing element 6 includes a cylindrical portion 60, a plate-shaped portion 61 arranged at one end in an axial direction of the cylindrical portion 60 and extending radially outward of the cylindrical portion 60, and a circular arc-shaped portion 62 connecting the cylindrical portion 60 to the plate-shaped portion 61. The circular arc-shaped portion 62 has a radius of curvature, R1, of not less than 0.5 mm and not more than 1.5 mm. The fixing element 6 is formed by cold forging, for example.

The cylindrical portion 60, in a state of being assembled to the follower bearing module A, is arranged in the through hole TH of the shaft member 1. The cylindrical portion 60 is arranged within a portion of the through hole TH corresponding to the third inner wall surface 132. The cylindrical portion 60 includes an outer circumferential surface 600, an eighth end surface 601 connected to the outer circumferential surface 600, and a fourth inner circumferential surface 602 connected to the eighth end surface 601. The outer circumferential surface 600 has a cylindrical shape. The outer circumferential surface 600 has a diameter larger than that of the second inner wall surface 131 of the inner wall surface 13. The diameter of the outer circumferential surface 600 is smaller than that of the third inner wall surface 132 of the inner wall surface 13 of the shaft member 1. The eighth end surface 601 faces in the same direction as the insertion direction when the cylindrical portion 60 is inserted into the through hole TH. The fourth inner circumferential surface 602 has a threaded groove formed thereon. That is, the cylindrical portion 60 includes the threaded groove on the fourth inner circumferential surface 602.

The plate-shaped portion 61 is arranged to be orthogonal to a central axis δ1 of the cylindrical portion 60. The plate-shaped portion 61 includes an outer circumferential surface 610, an inner circumferential surface 611, a ninth end surface 612 connecting the outer circumferential surface 610 to the circular arc-shaped portion 62, and a tenth end surface 613 connecting the outer circumferential surface 610 to the inner circumferential surface 611. The outer circumferential surface 610 includes a pair of flat surface portions 614, 615 which are flat-shaped and arranged parallel to each other, and a pair of circular arc surface portions 616, 617 which are circular arc-shaped and connecting the flat surface portion 614 to the flat surface portion 615. As shown in FIG. 7, the flat surface portions 614 and 615 are each arranged at a position a predetermined distance L1 away from the central axis δ1 of the cylindrical portion 60. The circular arc surface portions 616 and 617 have a predetermined radius L2 centered on a crossing point between the central axis δ1 of the cylindrical portion 60 and a plane on which the plate-shaped portion 61 extends. The distance L1 is smaller than the radius L2. The circular arc surface portions 616 and 617 are arranged concentrically with the cylindrical portion 60. The flat surface portions 614 and 615 can be utilized to rotate the fixing element 6 with the central axis δ1 of the cylindrical portion 60 as the axis of rotation by using a wrench or other tool. Pinching the outer circumferential surface 610 of the plate-shaped portion 61 with a pair of pinching members (not shown) such that the pair of pinching members contact the flat surface portions 614 and 615 makes it possible to suppress the rotation of the fixing element 6 with the central axis δ1 of the cylindrical portion 60 as the axis of rotation.

The inner circumferential surface 611 has a regular hexagonal cylindrical shape. Rotation of the fixing element 6 with the central axis δ1 of the cylindrical portion 60 as the axis of rotation can be suppressed by fitting a hexagon socket screw key or the like to the inside of the cylindrical portion 60 so as to contact the inner circumferential surface 611.

Referring to FIGS. 2 and 3 together, the cylindrical portion 60 has a thickness TK1 which is different from a thickness TK2 of the plate-shaped portion 61. Being different in thickness means that the ratio of the thickness TK2 of the plate-shaped portion 61 to the thickness TK1 of the cylindrical portion 60 is less than 1.0 or more than 1.3. The thickness TK1 of the cylindrical portion 60 is equivalent to the distance between the outer circumferential surface 600 and the fourth inner circumferential surface 602. The thickness TK2 of the plate-shaped portion 61 is equivalent to the distance between the ninth end surface 612 and the tenth end surface 613. The thickness TK2 of the plate-shaped portion 61 is not less than 1 mm and not more than 5 mm. This makes it possible to reduce the installation space for the fixing element 6 while ensuring a minimum rigidity of the plate-shaped portion 61. The thickness TK2 of the plate-shaped portion 61 is preferably 2 mm.

### <Bolt>

Referring to FIGS. 1, 2, 3, and 4 together, the bolt 7 includes a body portion 70 having a thread on its outer circumferential surface that can be coupled with the threaded groove of the cylindrical portion 60, and a head portion 71 connected to one end portion in a longitudinal direction of the body portion 70 and having a larger outside diameter than the body portion 70. The outside diameter of the body portion 70 is smaller than the diameter D2 of the portion of the through hole TH having a smallest diameter. The outside diameter of the head portion 71 is preferably larger than the diameter D2 of the portion of the through hole TH having a smallest diameter. The head portion 71 includes a recess 710 on an end surface that is opposite to the end surface connected to the body portion 70. The recess 710 includes an inner wall surface 711 having a regular hexagonal cylindrical shape. The bolt 7 can be tightened by fitting a hexagon socket screw key or the like to the inside of the recess 710 so as to contact the inner wall surface 711.

### [Procedure for Mounting Follower Bearing]

An example of the procedure for mounting the follower bearing B to the mounted member 9 will now be briefly described. First, the small diameter portion 11 of the shaft member 1 of the follower bearing B assembled is inserted into the mounting hole 92 of the mounted member 9 in a direction facing the first surface 90 of the mounted member 9 (the direction indicated by the arrow Y in the figure). The outer circumferential surface 110 of the small diameter portion 11 faces the inner wall surface 93 of the mounting hole 92. The seventh end surface 53 of the side plate 5 contacts the first surface 90 of the mounted member 9. At this time, the outer ring 2 does not contact the mounted member 9.

Subsequently, the fixing element 6 is inserted into the mounting hole 92 of the mounted member 9 in a direction facing the second surface 91 of the mounted member 9 (the direction opposite to the direction indicated by the arrow Y in the figure). The outer circumferential surface 600 of the cylindrical portion 60 faces the third inner wall surface 132 of the inner wall surface 13 of the shaft member 1. The bolt 7 is inserted into the through hole TH in a direction facing the first end surface 103 of the shaft member 1. The bolt 7 is rotated to couple the thread of the body portion 70 to the threaded groove of the cylindrical portion 60. The head portion 71 contacts the second stepped surface 133 of the inner wall surface 13 of the shaft member 1.

In this manner, the follower bearing B and the fixing element 6 can be fastened together by coupling between the threaded groove of the cylindrical portion 60 inserted into the through hole TH and the thread of the body portion 70 inserted into the through hole TH in the state where the plate-shaped portion 61 of the fixing element 6 is located on one side in the direction along the central axis δ as viewed from the through hole TH and where the head portion 71 of the bolt 7 is located on the other side in the direction along the central axis δ as viewed from the through hole TH.

### [Method of Producing Shaft Member of Follower Bearing]

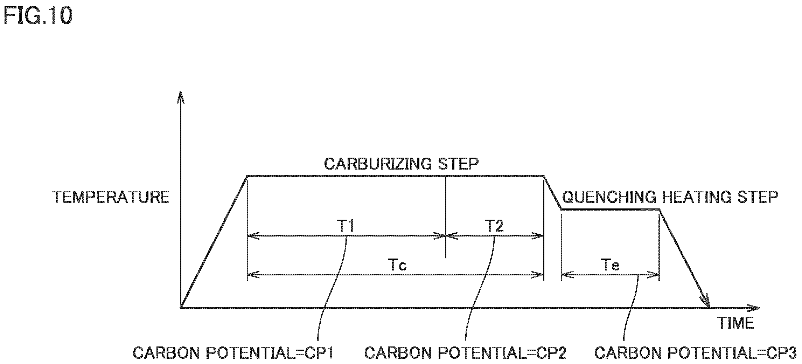

FIG. 9 is a flowchart illustrating steps in a method of producing the shaft member 1. FIG. 10 is a diagram showing an example of a portion of a heat pattern during the process of producing the shaft member 1. In FIG. 10, the vertical axis represents temperature. In FIG. 10, the horizontal axis represents time. A method of producing the shaft member 1 (inner member) of the follower bearing B described above will now be described with reference to FIGS. 9 and 10. The method of producing the shaft member 1 includes a step of preparing a formed body (step ST1), a step of forming a carburized layer (step ST2), and a step of quench hardening the formed body (step ST3). The method of producing the shaft member 1 further includes a step of tempering the formed piece (step ST4), and a step of finishing the formed piece by grinding or the like (step ST5).

In step ST1, a formed body having a shape of the shaft member 1 and composed of a steel containing not less than 0.12 mass% and not more than 0.39 mass% carbon, not less than 0.05 mass% and not more than 0.40 mass% silicon, not less than 0.55 mass% and not more than 0.95 mass% manganese, and not less than 0.60 mass% and not more than 1.25 mass% chromium, with the balance consisting of iron and unavoidable impurities (hereinafter, simply referred to as "steel" in steps ST1 to ST5) is prepared. The shaft member 1 includes the outer circumferential surface 12 including the annular first raceway surface P1 having the central axis δ, and the inner wall surface 13 defining the through hole TH including the central axis δ. The through hole TH has a diameter that is 40% or more of an outside diameter of a portion of the shaft member 1 having a smallest outside diameter. The above formed body is prepared by, for example, forming it by cold forging and then adjusting the shape by turning. Forming the formed body by cold forging enables grain flows in the shaft member 1 to be continuous, thereby ensuring the strength of the shaft member 1.

Next, in step ST2, the formed body prepared in step ST1 is heated to a temperature not lower than the A1 point of the steel and not higher than 900°C in a carburizing atmosphere to form a carburized layer so as to constitute at least a part of the surface of the formed body. In the present embodiment, the carburized layer is formed to constitute the entire surface of the formed body. The carburizing atmosphere is, for example, an atmosphere of an endothermic converted gas consisting mainly of carbon monoxide, hydrogen, and nitrogen, with a hydrocarbon-based gas such as propane, butane, or acetylene being introduced as an enriched gas. The step of forming the carburized layer includes, for example, a carburizing step and a subsequent quenching heating step, as shown in FIG. 10.

In the carburizing step, the temperature is maintained at a temperature not lower than the A1 point of the steel and not higher than 900°C for a predetermined carburizing time Tc. The carburizing time Tc is, for example, 160 minutes. In the carburizing step, the carbon potential in the atmosphere is maintained at a predetermined value CP1 (for example, 1.1%) for a first time T1 (for example, 130 minutes) in the carburizing time Tc. Thereafter, the carbon potential in the atmosphere is maintained at a predetermined value CP2 (for example, 0.9%) lower than the value CP1 for a second time T2 (for example, 30 minutes) in the carburizing time Tc.

In the quenching heating step, the temperature is maintained at a predetermined temperature (for example, 860°C) for a predetermined quenching heating time Te. The quenching heating time Te is, for example, 30 minutes. During the quenching heating time, the carbon potential in the atmosphere is maintained at a value CP3 (for example, 0.9%) which is equivalent to the value CP2.

In step ST3, the formed body with the carburized layer formed is cooled from the temperature range not lower than the A1 point of the steel to a temperature range not higher than the MS point for quench hardening the formed body. For example, the formed body is quench hardened by cooling it in oil to a predetermined temperature (for example, 60°C).

In step ST4, the formed piece that has been quench hardened in step ST3 is tempered. For example, the tempering is performed by heating to a temperature of 175°C for 120 minutes.

In step ST5, the formed piece that has been tempered in step ST4 is finished by grinding or the like. For example, the outer circumferential surface including the first raceway surface P1 of the large diameter portion 10 of the shaft member 1 is subjected to grinding to thereby remove an abnormal carburized layer (intergranular oxidation layer) generated in the carburizing treatment. At this time, the outer circumferential surface of the small diameter portion 11 corresponding to the first end portion 11a is not subjected to grinding. In other words, in the small diameter portion 11, an abnormal carburized layer exists in the region including the outer circumferential surface corresponding to the first end portion 11a. The shaft member 1 is produced through the processes in steps ST1 to ST5 as described above.

It should be noted that in the above step ST1, a formed body having the shape of the shaft member 1 and composed of a steel containing not less than 0.12 mass% and not more than 0.39 mass% carbon, not less than 0.05 mass% and not more than 0.40 mass% silicon, not less than 0.55 mass% and not more than 0.95 mass% manganese, not less than 0.60 mass% and not more than 1.25 mass% chromium, and not less than 0.15 mass% and not more than 0.35 mass% molybdenum, with the balance consisting of iron and unavoidable impurities, may be prepared. Even in this case, the processes in steps ST2 to ST5 are identical to those described above.

### (Embodiment 2)

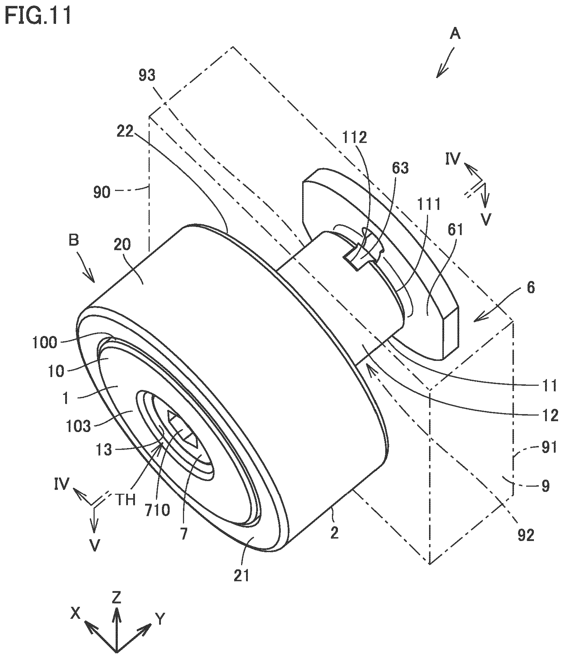

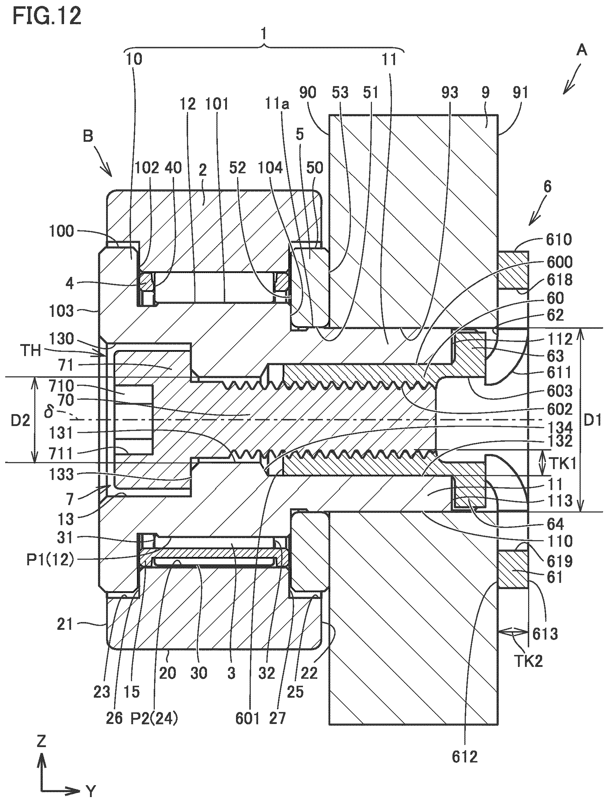

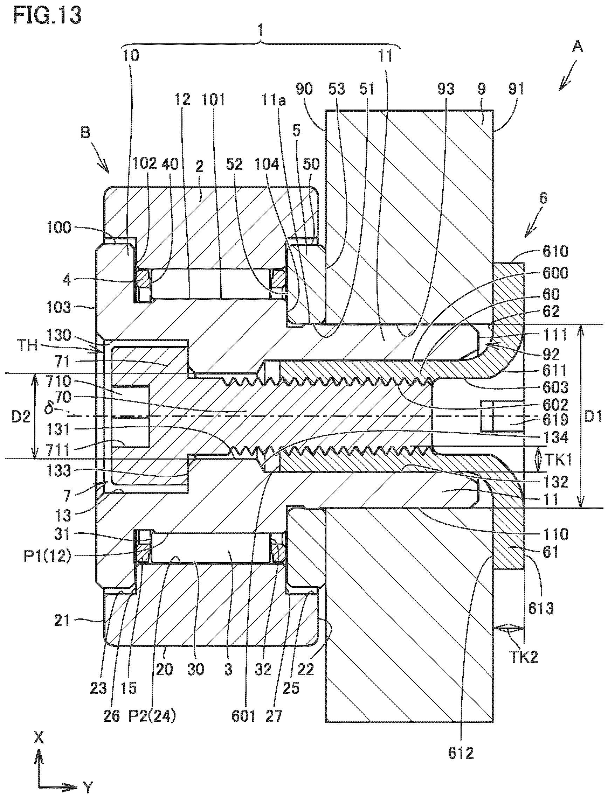

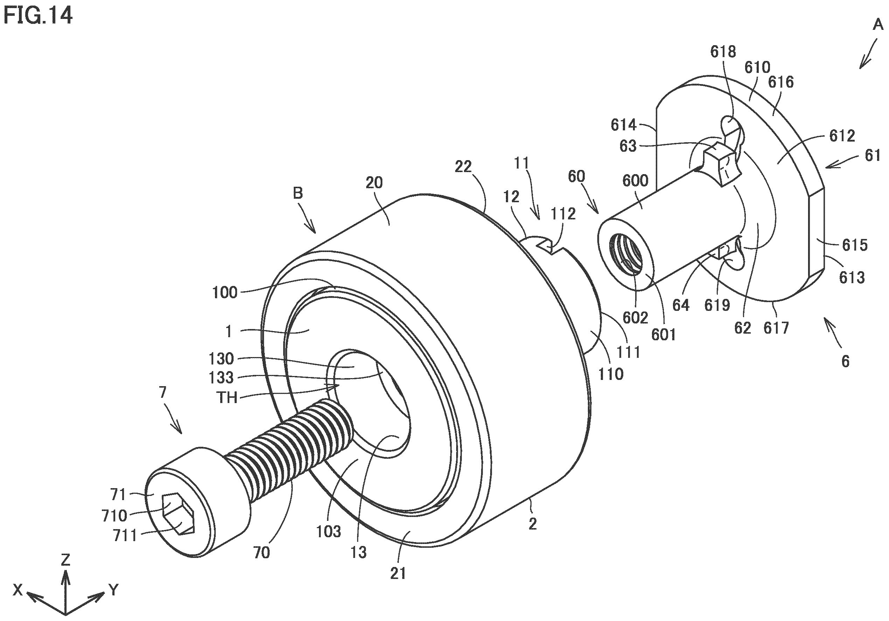

Embodiment 2 of the present disclosure will now be described. FIG. 11 is a schematic perspective view of a follower bearing module A in Embodiment 2 of the present disclosure. FIG. 12 is a schematic view of a cross section indicated by IV-IV in FIG. 11. FIG. 13 is a schematic view of a cross section indicated by V-V in FIG. 11. FIG. 14 is a schematic exploded perspective view of the follower bearing module A shown in FIG. 11. In FIG. 11, the mounted member 9 is indicated by long dashed short dashed lines. In FIGS. 12 and 13, the central axis δ is indicated by a long dashed short dashed line. In FIG. 14, the illustration of the mounted member 9 is omitted.

### [Follower Bearing Module]

Referring to FIGS. 11, 12, and 14 together, the small diameter portion 11 of the shaft member 1 further includes notches 112 and 113 formed so as to cut off portions of corners formed by the outer circumferential surface 110 and the third end surface 111. The notches 112 and 113 are arranged 180 degrees apart from each other in a circumferential direction of the small diameter portion 11. The notches 112 and 113 each have a rectangular contour, whether viewed from the axial direction or from the radial direction.

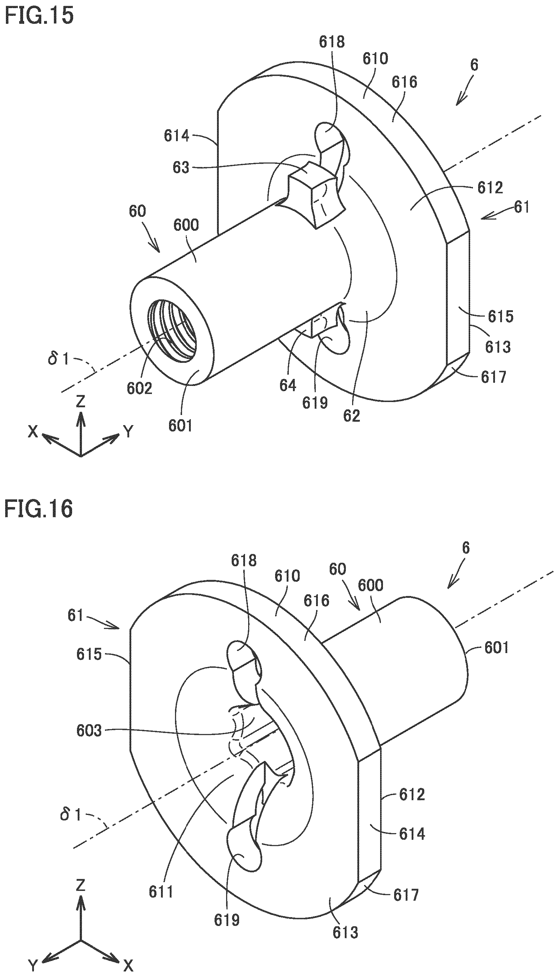

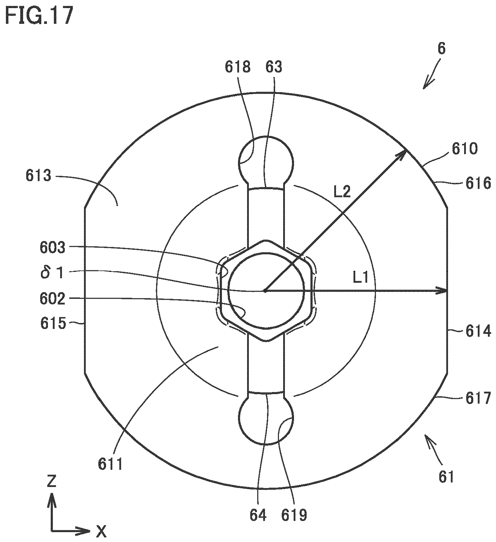

FIG. 15 is a schematic perspective view of the fixing element 6 in Embodiment 2 of the present disclosure, as viewed in a first direction. FIG. 16 is a schematic perspective view of the fixing element 6 of FIG. 15, as viewed in a second direction which is opposite to the first direction. FIG. 17 is a schematic view of the fixing element 6 of FIG. 15, as viewed in a direction facing the tenth end surface 613 of the plate-shaped portion 61.

Referring to FIGS. 11, 12, 14, 15, 16, and 17 together, the fixing element 6 further includes protruding portions 63 and 64 that protrude radially outward of the cylindrical portion 60 on the outer circumferential surface 600 of the cylindrical portion 60 from portions near the plate-shaped portion 61. The protruding portion 63 is fitted into the notch 112 of the small diameter portion 11 of the shaft member 1. The protruding portion 63 interferes with the inner wall surface of the notch 112 to thereby suppress the rotation of the shaft member 1 with the central axis δ or an axis parallel to the central axis δ as the axis of rotation. The protruding portion 64 is fitted into the notch 113 of the small diameter portion 11. The protruding portion 64 interferes with the inner wall surface of the notch 113 to thereby suppress the rotation of the shaft member 1 with the central axis δ or an axis parallel to the central axis δ as the axis of rotation. Such protruding portions 63, 64 are capable of suppressing the rotation of the shaft member 1 with the central axis δ or an axis parallel to the central axis δ as the axis of rotation.

Referring to FIGS. 12, 13, 14, 15, 16, and 17 together, the cylindrical portion 60 further includes a fifth inner circumferential surface 603 connected to the fourth inner circumferential surface 602. The fifth inner circumferential surface 603 has a regular hexagonal cylindrical shape. Rotation of the fixing element 6 with the central axis δ1 of the cylindrical portion 60 as the axis of rotation can be suppressed by fitting a hexagon socket screw key or the like to the inside of the cylindrical portion 60 so as to contact the fifth inner circumferential surface 603. The inner circumferential surface 611 of the plate-shaped portion 61 has a circular arc shape connecting the tenth end surface 613 of the plate-shaped portion 61 to the fifth inner circumferential surface 603 of the cylindrical portion 60.

The plate-shaped portion 61 has two plate-shaped portion through holes 618 and 619 formed therein. The plate-shaped portion through holes 618 and 619 are arranged 180 degrees apart from each other in a circumferential direction of the cylindrical portion 60. The plate-shaped portion through holes 618 and 619 are arranged at positions farther than the protruding portions 63 and 64 with respect to the central axis δ1 of the cylindrical portion 60. With such plate-shaped portion through holes 618, 619 being formed in the fixing element 6, for example in the case of producing the fixing element 6 by press forming, the protruding portions 63, 64 can be easily formed by deforming portions of the plate-shaped portion 61 utilizing the plate-shaped portion through holes 618, 619. It should be noted that there may be one notch in the small diameter portion 11 and one protruding portion in the fixing element 6, or there may be three or more of each, as required. The number of notches in the small diameter portion 11 may be greater than the number of protruding portions in the fixing element 6.

### [Procedure for Mounting Follower Bearing]

For the procedure for mounting the follower bearing B in Embodiment 2, the following is added to the above-described procedure for mounting the follower bearing B in Embodiment 1. The fixing element 6 is inserted into the mounting hole 92 of the mounted member 9 such that the protruding portions 63, 64 of the fixing element 6 are fitted into the notches 112, 113 of the small diameter portion 11 of the shaft member 1. During tightening of the bolt 7, the protruding portions 63, 64 fitted in the notches 112, 113 of the small diameter portion 11 are caught, thereby suppressing the rotation of the fixing element 6. Thus, the so-called co-rotation of the bolt 7 and the fixing element 6 can be suppressed.

The method of producing the shaft member 1 (inner member) of the follower bearing B in Embodiment 2 is identical to the above-described method of producing the shaft member 1 (inner member) in Embodiment 1.

### (Example 1)

A shaft member 1 was produced from SCM415 specified in JIS G 4053 in accordance with the method of producing the shaft member 1 (inner member) described above. For the shaft member 1 produced, the grain size number of the prior austenite grains in the carburized layer was measured on the basis of JIS G 0551. First, the shaft member 1 was cut in a cross section crossing the surface of the shaft member 1. Then, a corrosive liquid such as a picric acid saturated aqueous solution, for example, was used for the cross section formed by cutting to make the prior austenite grain boundaries appear, and the area around the surface of the carburized layer was observed with an optical microscope or the like to thereby measure the grain size number of the prior austenite grains.

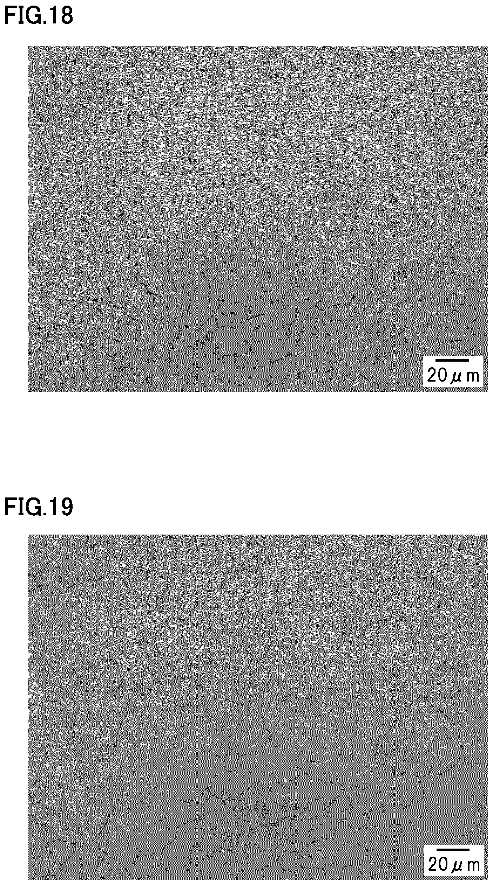

FIG. 18 is a diagram showing an example of the prior austenite grains in the carburized layer of the shaft member 1 produced according to the method of producing the shaft member 1 of the present disclosure. The example shown in FIG. 18 was obtained by heating to a temperature of 860°C in the carburizing step. In the example shown in FIG. 18, the grain size number of the prior austenite grains is 9.5. FIG. 19 is a diagram showing a comparative example of the prior austenite grains in a carburized layer of a shaft member 1. The example shown in FIG. 19 was obtained by heating to a temperature of 930°C in the carburizing step. In the example shown in FIG. 19, the grain size number of the prior austenite grains is 7.8.

As shown in FIG. 18, a carburized layer having the prior austenite grains with a grain size number of 8.6 or more was obtained by heating the formed body to a temperature not lower than the A1 point of the steel and not higher than 900°C in a carburizing atmosphere in the carburizing step.

### (Example 2)

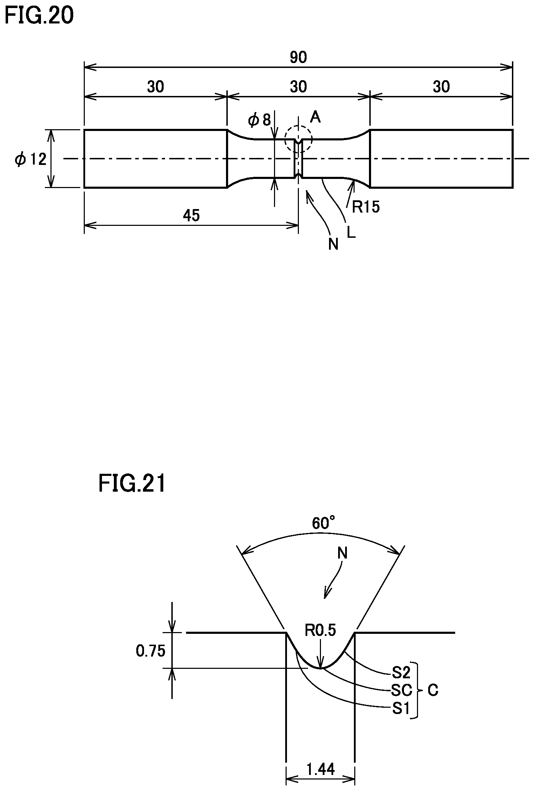

FIG. 20 is a schematic view of a test specimen used in a rotating bending fatigue test in Example 2. FIG. 21 is an enlarged view of a notch N in the test specimen of FIG. 20. In FIGS. 20 and 21, the numbers indicate dimensions (in mm). In FIGS. 20 and 21, "φ" means diameter. In FIGS. 20 and 21, "R" means radius of curvature. A rotating bending fatigue test was performed on the basis of JIS Z 2274 using the test specimens as shown in FIG. 20. The load frequency was 50 kHz. The test was terminated if the test specimen did not break until the number of revolutions of the test specimen had reached 10⁷ times from the beginning of the test.

Referring to FIG. 20, the test specimen has a shape conforming to the test specimen No. 1 (1-8) as specified in JIS Z 2274. The notch N is formed in a parallel portion L of the test specimen. Referring to FIG. 21, the notch N has an opening of 1.44 mm in the longitudinal direction of the test specimen and a depth of 0.75 mm in the radial direction of the test specimen. The notch N has a contour C which includes a pair of inclined surfaces S1 and S2 arranged so as to make an angle of 60 degrees as viewed in the radial direction of the test specimen, and a curved surface SC connecting the inclined surface S1 to the inclined surface S2 and having a radius of curvature of 0.5 mm. For the test specimen, one composed of SCM415 specified in JIS G 4053 was prepared. Three types of test specimens were prepared, including one heated to a temperature of 860°C in a carburizing atmosphere, one heated to a temperature of 900°C in the carburizing atmosphere, and one heated to a temperature of 930°C in the carburizing atmosphere. The test specimens were all fabricated by forming a carburized layer and then performing the quenching and tempering steps, as in the above-described method of producing the shaft member 1. The notch N has a surface in the state not subjected to grinding (the state in which the abnormal carburized layer exists). The results obtained from the rotating bending fatigue test performed on these test specimens were applied to the regression model described in the Standard Evaluation Method of Fatigue Reliability for Metallic Materials (JSMS-SD-6-02) of the Society of Materials Science, Japan, to obtain S-N curves.

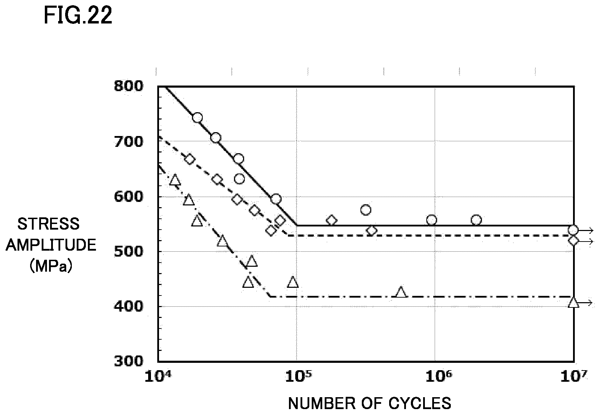

FIG. 22 is a diagram showing the S-N curves obtained from the rotating bending fatigue test in Example 2. In FIG. 22, the vertical axis shows the stress amplitude on a normal scale. In FIG. 22, the horizontal axis shows the number of cycles on a logarithmic scale. In FIG. 22, the arrows indicate the termination of the test. In FIG. 22, the circles indicate data points for the test specimens heated to the temperature of 860°C in the carburizing atmosphere, the diamonds indicate data points for the test specimens heated to the temperature of 900°C in the carburizing atmosphere, and the triangles indicate data points for the test specimens heated to the temperature of 930°C in the carburizing atmosphere. In FIG. 22, the bold line shows the S-N curve for the test specimens heated to the temperature of 860°C in the carburizing atmosphere, the dashed line shows the S-N curve for the test specimens heated to the temperature of 900°C in the carburizing atmosphere, and the long dashed short dashed line shows the S-N curve for the test specimens heated to the temperature of 930°C in the carburizing atmosphere.

As shown in FIG. 22, the test specimens heated to the temperature of 860°C in the carburizing atmosphere had a fatigue limit of about 547 MPa, the test specimens heated to the temperature of 900°C in the carburizing atmosphere had a fatigue limit of about 529 MPa, and the test specimens heated to the temperature of 930°C in the carburizing atmosphere had a fatigue limit of about 417 MPa.

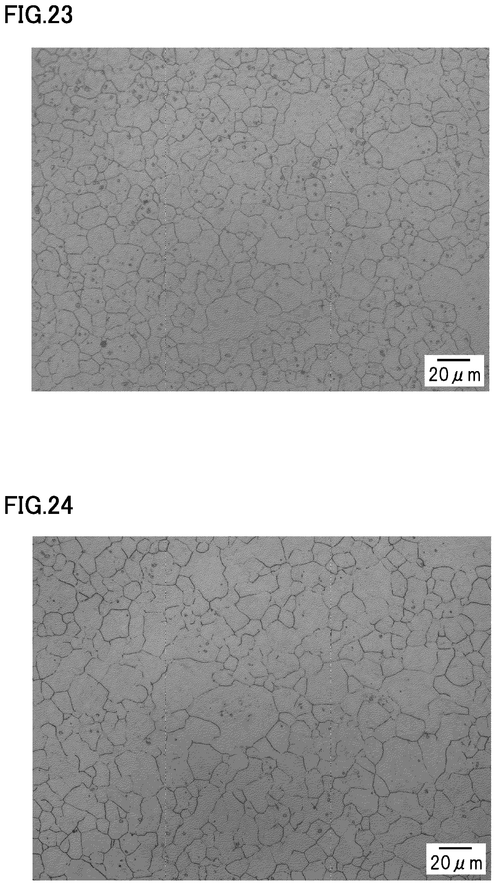

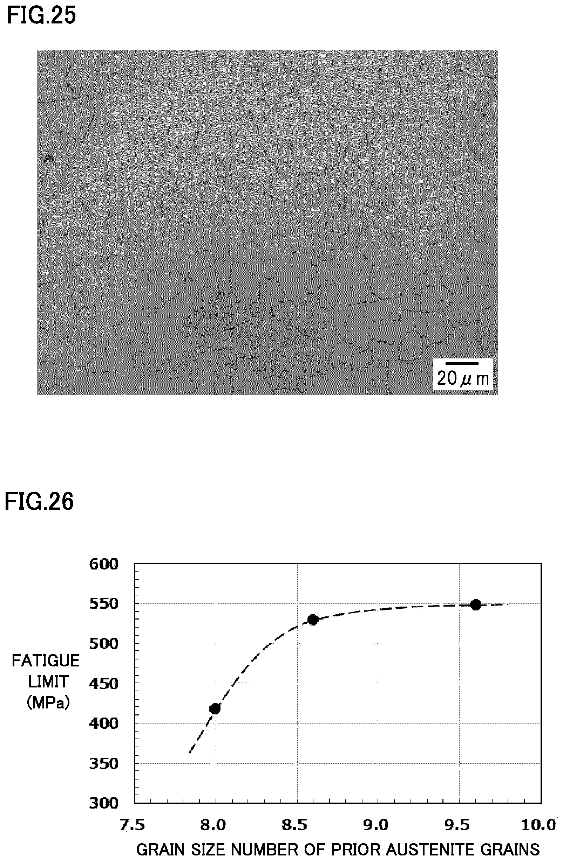

FIG. 23 is a diagram showing an example of the prior austenite grains in a carburized layer of a test specimen heated to a temperature of 860°C in a carburizing atmosphere. In the example shown in FIG. 23, the grain size number of the prior austenite grains is 9.6. FIG. 24 is a diagram showing an example of the prior austenite grains in a carburized layer of a test specimen heated to a temperature of 900°C in a carburizing atmosphere. In the example shown in FIG. 24, the grain size number of the prior austenite grains is 8.6. FIG. 25 is a diagram showing an example of the prior austenite grains in a carburized layer of a test specimen heated to a temperature of 930°C in a carburizing atmosphere. In the example shown in FIG. 25, the grain size number of the prior austenite grains is 8.0.

FIG. 26 is a diagram illustrating a relationship between the fatigue limit and the grain size number of the prior austenite grains. In FIG. 26, the vertical axis represents the fatigue limit. In FIG. 26, the horizontal axis represents the grain size number of the prior austenite grains. The dashed line in FIG. 26 is an approximate curve expressing the transition of the fatigue limit with respect to the grain size number of the prior austenite grains. The relationship between the fatigue limit and the grain size number of the prior austenite grains was obtained by first obtaining a relationship between the fatigue limits obtained from the S-N curves in FIG. 22 and the temperatures to which the test specimens were heated, and then replacing the temperatures to which the test specimens were heated with the grain size numbers of the prior austenite grains in the carburized layer of the test specimens. As shown in FIG. 26, while the fatigue limit increases rapidly with the increase of the grain size number up to the grain size number of 8.6 of the prior austenite grains in the carburized layer, once the number exceeds 8.6, the increase of the fatigue limit becomes moderate and an excellent fatigue limit is obtained. From the above, it can be said that it is effective to set the grain size number of the prior austenite grains to 8.6 or more in order to obtain a favorable fatigue limit.

It should be understood that the embodiments disclosed herein are illustrative and non-restrictive in every respect. The scope of the present invention is defined by the terms of the claims, and is intended to include any modifications within the scope and meaning equivalent to the terms of the claims.

### Reference Signs List

1: shaft member (inner member); 2: outer ring; 3: roller (rolling element); 4: retainer; 5: side plate; 6: fixing element; 7: bolt; 9: mounted member; 10: large diameter portion; 11: small diameter portion; 11a: first end portion; 11b: portion; 12: outer circumferential surface; 13: inner wall surface; 20: outer circumferential surface; 21: fourth end surface; 22: fifth end surface; 23: first inner circumferential surface; 24: second inner circumferential surface; 25: third inner circumferential surface; 26: fourth stepped surface; 27: fifth stepped surface; 30: outer circumferential surface; 31: end surface; 32: end surface; 40: pocket; 50: outer circumferential surface; 51: inner circumferential surface; 52: sixth end surface; 53: seventh end surface; 60: cylindrical portion; 61: plate-shaped portion; 62: circular arc-shaped portion; 63: protruding portion; 64: protruding portion; 70: body portion; 71: head portion; 90: first surface; 91: second surface; 92: mounting hole; 93: inner wall surface; 100: first outer circumferential surface; 101: second outer circumferential surface; 102: first stepped surface; 103: first end surface; 104: second end surface; 110: outer circumferential surface; 111: third end surface; 112: notch; 113: notch; 130: first inner wall surface; 131: second inner wall surface; 132: third inner wall surface; 133: second stepped surface; 134: third stepped surface; 600: outer circumferential surface; 601: eighth end surface; 602: fourth inner circumferential surface; 603: fifth inner circumferential surface; 610: outer circumferential surface; 611: inner circumferential surface; 612: ninth end surface; 613: tenth end surface; 614: flat surface portion; 615: flat surface portion; 616: circular arc surface portion; 617: circular arc surface portion; 618: plate-shaped portion through hole; 619: plate-shaped portion through hole; 710: recess; 711: inner wall surface; A: follower bearing module; B: follower bearing; C: contour; D1: outside diameter; D2: diameter; L: parallel portion; L1: distance; L2: radius; N: notch; P1: first raceway surface; P2: second raceway surface; S1: inclined surface; S2: inclined surface; SC: curved surface; T1: first time; T2: second time; TH: through hole; TK1: thickness; TK2: thickness; Tc: carburizing time; Te: quench heating time; Y: arrow; δ: central axis; and δ1: central ais.

## Claims

1. A follower bearing comprising:
an inner member including an outer circumferential surface that includes an annular first raceway surface having a central axis and an inner wall surface that defines a through hole including the central axis;
an outer ring including an annular second raceway surface facing the first raceway surface on an inner circumferential surface thereof; and
a plurality of rolling elements arranged on an annular raceway along the first and second raceway surfaces so as to contact the first and second raceway surfaces;
a portion of the through hole with a smallest diameter having a diameter that is 40% or more of an outside diameter of a portion of the inner member with a smallest outside diameter,
the inner member
being composed of a steel containing not less than 0.12 mass% and not more than 0.39 mass% carbon, not less than 0.05 mass% and not more than 0.40 mass% silicon, not less than 0.55 mass% and not more than 0.95 mass% manganese, and not less than 0.60 mass% and not more than 1.25 mass% chromium, with the balance consisting of iron and unavoidable impurities, and
including a carburized layer containing not less than 0.60 mass% and not more than 1.20 mass% carbon so as to constitute at least a part of a surface thereof,
in the carburized layer, the grain size number of prior austenite grains as specified in JIS G 0551 being not less than 8.6.

2. A follower bearing comprising:
an inner member including an outer circumferential surface that includes an annular first raceway surface having a central axis and an inner wall surface that defines a through hole including the central axis;
an outer ring including an annular second raceway surface facing the first raceway surface on an inner circumferential surface thereof; and
a plurality of rolling elements arranged on an annular raceway along the first and second raceway surfaces so as to contact the first and second raceway surfaces;
a portion of the through hole with a smallest diameter having a diameter that is 40% or more of an outside diameter of a portion of the inner member with a smallest outside diameter,
the inner member
being composed of a steel containing not less than 0.12 mass% and not more than 0.39 mass% carbon, not less than 0.05 mass% and not more than 0.40 mass% silicon, not less than 0.55 mass% and not more than 0.95 mass% manganese, not less than 0.60 mass% and not more than 1.25 mass% chromium, and not less than 0.15 mass% and not more than 0.35 mass% molybdenum, with the balance consisting of iron and unavoidable impurities, and
including a carburized layer containing not less than 0.60 mass% and not more than 1.20 mass% carbon so as to constitute at least a part of a surface thereof,
in the carburized layer, the grain size number of prior austenite grains as specified in JIS G 0551 being not less than 8.6.

3. The follower bearing according to claim 1 or 2, wherein the surface of the inner member constituted by the carburized layer has a hardness of not less than 700 HV.

4. The follower bearing according to claim 1 or 2, wherein
the inner member includes
a large diameter portion including the first raceway surface on an outer circumferential surface thereof, and
a small diameter portion having an outside diameter smaller than an outside diameter of the large diameter portion and connected to the large diameter portion at a first end portion which is an end portion in a direction along the central axis, and
the carburized layer is arranged so as to include an outer circumferential surface corresponding to the first end portion in the small diameter portion.

5. A follower bearing module comprising:
the follower bearing according to claim 1 or 2;
a fixing element; and
a fastening element;
the fixing element including
a cylindrical portion having a threaded groove on an inner circumferential surface thereof, and
a plate-shaped portion arranged at one end in an axial direction of the cylindrical portion and extending radially outward of the cylindrical portion,
the fastening element including
a body portion having a thread on an outer circumferential surface thereof that can be coupled with the threaded groove of the cylindrical portion, and
a head portion connected to one end portion in a longitudinal direction of the body portion and having a larger outside diameter than the body portion,
the follower bearing and the fixing element being capable of being fastened together by coupling between the threaded groove of the cylindrical portion inserted into the through hole and the thread of the body portion inserted into the through hole in a state where the plate-shaped portion of the fixing element is located on one side in a direction along the central axis as viewed from the through hole and where the head portion of the fastening element is located on another side in the direction along the central axis as viewed from the through hole.

6. The follower bearing module according to claim 5, wherein
the fixing element further includes a circular arc-shaped portion connecting the cylindrical portion to the plate-shaped portion, and
the circular arc-shaped portion has a radius of curvature of not less than 0.5 mm and not more than 1.5 mm.

7. A method of producing an inner member of a follower bearing,
the inner member including an outer circumferential surface that includes an annular first raceway surface having a central axis and an inner wall surface that defines a through hole including the central axis,
a portion of the through hole with a smallest diameter having a diameter that is 40% or more of an outside diameter of a portion of the inner member with a smallest outside diameter,
the method of producing the inner member comprising the steps of:
preparing a formed body having a shape of the inner member and composed of a steel containing not less than 0.12 mass% and not more than 0.39 mass% carbon, not less than 0.05 mass% and not more than 0.40 mass% silicon, not less than 0.55 mass% and not more than 0.95 mass% manganese, and not less than 0.60 mass% and not more than 1.25 mass% chromium, with the balance consisting of iron and unavoidable impurities;
forming a carburized layer so as to constitute at least a part of a surface of the formed body by heating the formed body in a carburizing atmosphere to a temperature not lower than an A1 point of the steel and not higher than 900°C; and
quench hardening the formed body by cooling the formed body with the carburized layer formed from a temperature range not lower than the A1 point of the steel to a temperature range not higher than an MS point.
